# EUROPEAN PATENT APPLICATION

(11) **EP 1 369 401 A2**
(43) Date of publication of application: **10.12.2003**
(21) Application number: 03253519.7
(22) Date of filing: 04.06.2003
(51) Int. Cl.: C04B 28/02, E21B 33/14

(54) **Sealing composition**

(30) Priority: 04.06.2002 US 162506
(71) Applicant: Halliburton Energy Services, Inc., Duncan, Oklahoma 73536 (US)
(72) Inventor: Verlaan, Marco L., Rotterdam 3046 NV (NL); Van der Werff, Niels, The Hague 2595 CP (NL)
(74) Representative: Wain, Christopher Paul

(57) **Abstract**

A subterranean zone penetrated by a well bore is sealed using a sealing composition comprising a cementitious material, cross-linkable material, and sufficient water to form a slurry, the cross-linkable material preferably being a 2-hydroxyethyl acrylate or a copolymer of acrylamide and t-butyl acrylate.

## Description

The present invention relates generally to a sealing composition for sealing a subterranean zone penetrated by a well bore.

In the drilling and completion of an oil or gas well, a cementing composition is often introduced in the well bore for cementing pipe string or casing. In this process, known as "primary cementing," the cementing composition is pumped into the annular space between the walls of the well bore and the casing. The cementing composition sets in the annular space, supporting and positioning the casing, and forming a substantially impermeable barrier, or cement sheath, which isolates the well bore into subterranean zones. Thus, the undesirable migration of fluids between zones is prevented after primary cementing.

Changes in pressure or temperature in the well bore over the life of the well can result in compromised zonal isolation. Also, activities undertaken in the well bore, such as pressure testing, well completion operations, hydraulic fracturing, and hydrocarbon production can affect zonal isolation. Such compromised zonal isolation is often evident as cracking or plastic deformation in the cementing composition, or de-bonding between the cementing composition and either the well bore or the casing. Compromised zonal isolation requires remedial operations to reestablish isolation between the zones.

One such remedial operation is known as a squeeze, where pressure is used to force a sealing composition into cracks or other leak paths and restore zonal isolation. Accordingly, a sealing composition comprising cement can be used in a squeeze operation to plug a perforated interval of casing and sheath, and is particularly useful because cement allows subsequent re-perforation if desired. Therefore, a sealing composition incorporating cement, but having superior sealing properties, is desirable for squeeze operations.

We have now devised such a sealing composition.

In one aspect, the invention provides a sealing composition for sealing a subterranean zone penetrated by a well bore, which composition comprises cement, cross-linkable material, and water.

The invention also provides a method of sealing a subterranean zone penetrated by a well bore, which method comprises placing a sealing composition into the subterranean zone; and allowing the sealing composition to set therein, the sealing composition being of the invention.

A variety of cements can be used in the present invention, including cements comprised of calcium, aluminum, silicon, oxygen, and/or sulfur, which set and harden by reaction with water ("hydraulic cements"). Such hydraulic cements include Portland cements, pozzolan cements, gypsum cements, aluminous cements, silica cements, and alkaline cements. Portland cements of the type defined and described in API Specification 10, 5^{th} Edition, July 1, 1990, of the American Petroleum Institute (to which reference should be made) are preferred. API Portland cements include Classes A, B, C, G, and H, of which API Class G is particularly preferred for the present embodiment. As will be understood, the desired amount of cement is dependent on the volume required for the sealing operation. Alternatively, the cement can be microfine cement, such as is available from Dyckerhoff GmBH, Lengerich, Germany, under the trademark "MICRODUR RU."

In one embodiment, the cross-linkable material is a 2-hydroxy ethyl acrylate monomer, such as is available from Halliburton Energy Services of Duncan, Oklahoma, USA, under the trademark "PERMSEAL™ ." Such cross-linkable material is described in U.S. patent nos. 5,358,051 and 5,335,726, to which reference should be made. Suitable crosslinkable material comprises water soluble, vinyl monomers preferably selected from compounds represented by the general formula 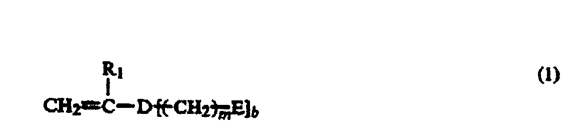 wherein:

R₁ = ―CH₃ or ―H.

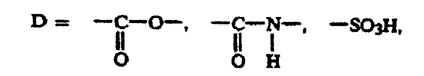

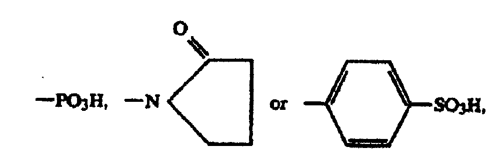

E= ―N(C_{*n*}H₂_{*n*}+1)_{*a*}, ―C(CH₃)₂SO₃H or ―H.

n=1 or 2, a=2 or 3,
m=0, 1, 2 or 3 and b=0 or 1;
when

D=―SO₃H,―PO₃H,

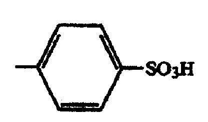

or 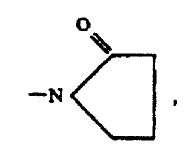 then b = 0;
when 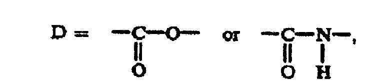 then b= 1; and
when
a=3, then a suitable counter ion is present.
In preferred embodiments

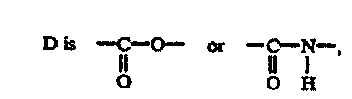

E is ―C(CH₃)₂SO₃H or ―H,

b is 1 and m is 0 or 1.

Suitable crosslinking agents, in broad terms, are multifunctional, vinyl monomers preferably selected from compounds represented by the general formulas selected from the group consisting of

G(B-F-A)ₓ ,(2)

B(F-A)₂ ,(3)

and

AG(F-A); (4)

wherein 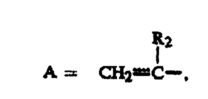 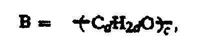 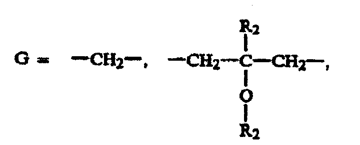 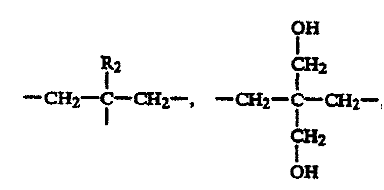 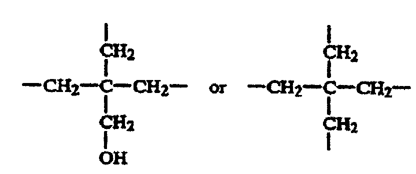 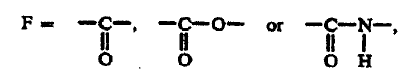 F can be the same or different, 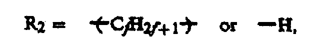 d=2 or 3,
e=0-20,
f=1 or 2 and
x=2, 3 or 4.

The controllable initiator of this invention, in broad terms, is for example a water soluble azo compound.

Preferably, the cross-linkable material is present in an amount of 0.3 mass percent to 10 mass percent of the sealing composition.

In a second embodiment, the cross-linkable material is a copolymer of acrylamide and t-butyl acrylate, such as is available from Halliburton Energy Services of Duncan, Oklahoma, USA, under the trademark "H₂ZERO^{TM}." Such cross-linkable material is described in U.S. patent nos. 5,836,392, 6,192,986, and 6,196,317, to which reference should be made.

Suitable cross-linkable materials include a water soluble copolymer of:
(i) at least one non acidic ethylenically unsaturated polar monomer and
(ii) at least one copolymerisable ethylenically unsaturated ester.

The invention also comprises compositions comprising the water soluble copolymer and a polyvalent metal ion gelling agent.

The present invention also provides a process for delaying the rate of gelling of an acrylic polymer with a gelling agent, in which the acrylic polymer is said copolymer comprising (i) and (ii).

The invention also provides a method for conformance control of a reservoir, especially one with high formation temperatures, which method comprises:
(a) injecting into the formation an aqueous solution of said composition,
(b) allowing the solution to flow through at least one zone of high permeability in said formation under increasing temperature conditions,
(c) allowing the composition to gel under said conditions. The copolymer is formed from at least one, e.g. 1-3 polar monomer(s) and at least one, e.g. 1-3 ester(s), and comprises structural units derived from said monomer(s) and ester(s); preferably the copolymer consists essentially of said structural units. The ester is substantially neutral as it is a fully esterified derivative of an acid, i.e. complete ester, rather than a partial ester with free acid group(s).

The ester is usually formed from a hydroxyl compound and an ethylenically unsaturated carboxylic acid. The ethylenically unsaturated group may be in the alpha-beta or beta gamma position relative to the carboxyl group or may be further distant; preferred acids have 3-20 carbons, such as 3-12, e.g. alkenoic and aralkenoic acids with 3-6 or 9-12 carbons respectively. Examples of the acids are acrylic, methacrylic, crotonic and cinnamic acids. The hydroxyl compound is usually an alcohol and may be of formula ROH, where R is a hydrocarbyl group, preferably an alkyl group, e.g. of 1-30 or 2-30 such as 1-6, 2-6, 7-30 or 7-24 carbons, alkenyl groups, e.g. of 2-20 carbons such as 2-6 carbons, cycloalkyl group, e.g. of 5-8 carbons, aryl group, e.g. aromatic hydrocarbyl group such as 6-20 carbons or aralkyl group, e.g. of 7-24 carbons. Examples of such R groups are methyl, ethyl, n- and iso propyl, n, sec, iso and tert butyl, n, sec, iso and tert amyl and hexyl, octyl and 2-ethylhexyl, decyl, allyl, cyclohexyl, palmityl, steryl, phenyl and benzyl. The R group may also be a hydrocarbyl group, substituted by at least one substituent e.g. 1-3 substituents, especially from hydroxyl, ether, and thio ether groups; electron donating groups are preferred. Ether substituents are preferred, especially alkoxy, aryloxy and aralkoxy, in which the alkyl, aryl and aralkyl groups may be as described above. Preferably the substituent is on the same carbon atom of the R group as is bonded to the hydroxyl group in the hydroxyl compound; alkoxymethyl and aralkoxy methyl groups are preferred. The hydroxyl compound may be a primary, secondary, iso or tertiary compound, especially with a tertiary carbon atom bonded to the hydroxyl group, e.g. tert butyl and trityl. The group R may also comprise a heterocyclic group either for bonding directly to the hydroxyl group of ROH or separated there from by an alkylene group, e.g. of 1-4 carbons such as methylene. Thus group R may be a saturated or unsaturated heterocyclic or heterocyclic alkylene group, e.g. of 3-8 carbons and at least one, e.g. one or two ring heteroatoms selected from 0, N and S, especially 0 and/or N, examples of such groups are furyl, tetrahydrofuryl, furfuryl and tetrahydrofurfuryl, pyranyl and tetra hydropyranyl. Most preferred R groups are tert-butyl, trityl, methoxymethyl, benzyloxymethyl and tetrahydropyranyl; stearyl, iso propyl, ethyl and methyl may also be preferred.

The ester (i) may also be derived from a hydroxyl compound, e.g. of formula ROH and an ethylenically unsaturated sulphonic or phosphoric acid, which may contain 2-20 carbons, especially 2-6 carbons, such as alkenyl acids, e.g. vinyl sulphonic acid and vinyl phosphonic acid. Thus the ester may be methyl or ethyl vinyl sulphonate or phosphonate. The ester may be derived from an acid containing an ethylenically unsaturated carboxamide (e.g. acrylamido) group, as well as the sulphonic or phosphonic acid group; an example of such an acid is 2-acrylamido-2-methylpropane sulphonic acid.

The ester is copolymerised with an ethylenically unsaturated polar monomer, in which the unsaturated group is usually vinyl or alpha methyl vinyl and may be derived from an unsaturated carboxylic acid (the acid being as further described above) e.g. primary, secondary or tertiary amide thereof, in which the amide is derived from ammonia, or a primary or secondary alkylamine, e.g. of 1-10 carbons, which may optionally be substituted by at least one hydroxyl group as in alkylol amides such as ethanolamides; examples of such carboxylic derived polar monomers are acrylamide, methacrylamide and acrylic ethanol amide. The polar monomer may also be a vinyl heterocyclic compound e.g. with at least one O, S or N atom in a ring with 3-8 carbons such as one with at least one carbonyl group in the ring, e.g. N-vinyl-pyrrolidone or-caprolactam, or a vinyl pyridine.

The copolymer may contain 0.01-50% e.g. 0.1-40% or 1-30%, especially 5-15% mol of structural units from said ester(s) and 99.99-50% e.g. 99.9-60% or 99-70 or 95-85% mol of structural units from said polar monomer(s). The copolymer may be a block or non block copolymer, e.g. a regular or random copolymer or a graft copolymer, especially with ester units grafted onto polymeric polar, monomer, e.g. ester grafted on polyacrylamide.

The copolymer is usually soluble in water to an extent of at least 1 g/l e.g. 1-200 g/l such as at least 10 g/l in distilled water at 15° C., especially in aqueous sodium chloride solution containing 32 g/l NaCI at 25° C. If desired, the copolymer may be mixed with a surfactant (e.g. in amount of 0.01-5% by wt of the solution) to help solubilise it in the water or sodium chloride solution.

The copolymer may have a weight average molecular weight of at least 50,000 e.g. 50,000-20 million, such as 100,000 to 10 million, especially 100,000-500,000 or 1-10 million; the molecular weight may be determined by conventional methods, e.g. gel permeation chromatography or intrinsic viscosity. The low mole wt copolymer may have a viscosity in aqueous 3.6% wt solution at 19° C. of 10-500 cps (measured at 60 rpm with a Haake viscometer). Preferably the copolymer is sheer thinnable, e.g. with the viscosity reducing by at least 10% on increasing the sheer rate by 10%. Preferably, the cross-linkable material is present in a range of 0.3 mass percent to 10 mass percent of the sealing composition.

The water used to form the slurry is present in an amount sufficient to make the slurry pumpable for introduction down hole. The water used to form a slurry in the present embodiment can be fresh water, unsaturated salt solution, including brines and seawater, and saturated salt solution. Generally, any type of water can be used, provided that it does not contain an excess of compounds well known to those skilled in the art, that adversely affect properties of the sealing composition. The water is preferably present in an amount of about 25-98 mass percent of the sealing composition, and more preferably in an amount of about 38 mass percent of the sealing composition.

The sealing composition may further comprise a latex comprising a styrene/butadiene copolymer having a styrene to butadiene weight ratio of about 25:75, with the styrene/butadiene copolymer suspended in a 50% by weight aqueous emulsion, discussed in Patent No. 5,688,844, and available from Halliburton Energy Services of Duncan, Oklahoma, USA, under the trademark "LATEX 2000™.''

In another embodiment, the sealing composition may further comprise a stabilizer, such as a C₁₅ alcohol ethoxylated with 40 moles of ethylene oxide, available from Halliburton Energy Services of Duncan, Oklahoma, USA, under the trademark "434C™ ."

A variety of additives may be added to the sealing composition to alter its physical properties. Such additives may include slurry density modifying materials (e.g., silica flour, silica fume, sodium silicate, microfine sand, iron oxides and manganese oxides), dispersing agents, set retarding agents, set accelerating agents, fluid loss control agents, strength retrogression control agents, and viscosifying agents well known to those skilled in the art.

The following Examples illustrate the invention.

### EXAMPLE 1

Components in the amounts listed in TABLE 1 were added to form five slurries for squeeze operations. Slurries 1 and 2 contained no cross-linkable material, while Slurries 3-5 contained cross-linkable material dispersed in fresh water in a ratio of 5% by weight of the resulting composition.

Slurries 1-5 variously include one or more of the following additives: fine silica flour available from Halliburton Energy Services of Duncan, Okla., under the trademark "SSA-1™ "; a bond improving/expanding additive comprising dead burned magnesium oxide for providing crystalline growth, available from Halliburton Energy Services of Duncan, Okla., under the trademark "MICROBOND HT™ "; a fluid loss additive comprising a copolymer of AMPS and N,N dimethylacrylamide, available from Halliburton Energy Services of Duncan, Okla., under the trademark "HALAD®-344"; and a friction reducer comprising the condensation reaction product of formaldehyde, acetone and sodium bisulfite, available from Halliburton Energy Services of Duncan, Okla., under the trademark "CFR-3L™.''

Various properties determined for each slurry are listed in TABLE 1.

**TABLE 1**

| Component | Slurry 1 | Slurry 2 | Slurry 3 | Slurry 4 | Slurry 5 |
|---|---|---|---|---|---|
| H₂ZERO cross-linkable material[% by weight of cement ("bwoc")] | - - | - - | 45.9 | 45.7 | 61.6 |
| Fresh water [% bwoc] | 45.9 | 61.6 | - - | - - | -- |
| Portland Class 'G' cement [%bwoc] | 100 | 100 | 100 | 100 | 100 |
| SSA-1 silica flour [%bwoc] | - - | 35 | - - | - - | 35 |
| MICROBOND HT additive[%bwoc] | - - | 0.75 | - - | - - | 0.75 |
| HALAD®-344 fluid loss additive [%bwoc] | 0.4 | 0.3 | - - | 0.3 | 0.3 |
| CFR-3L friction reducer[1/100kg] | - - | 0.25 | - - | 0.25 | 0.25 |
| Density [SG] | 1.85 | 1.85 | 1.85 | 1.85 | 1.85 |
| BHST[°F] | 212 | 257 | 212 | 212 | 257 |
| Rheology at mix | ND | ND | 262-187- | 300+- | 300+- |
| 300-200-100-6-3 | | | 105 | 300+-289- | 300+-224- |
| | | | 21-17 | 22-14 | 25-18 |
| Rheology @ 195°F | ND | ND | 197-140- | 300+- | ND |
| 300-200-100-6-3 | | | 87 | 300+-185- | |
| | | | 20-17 | 12-7 | |
| Squeeze pressure [psi] | 300 | 250 | 250 | 250 | 250 |
| Captured filtrate [cc/min] | - - | - - | 100/3 | 15/30 | 5/5 |
| Gelled | - - | - - | Yes | Yes | Yes |
| Max. flowback pres [psi] | 300 | 600 | 750 | 2100 | 2250 |

As shown in Table 1, Slurry 1 was a standard cement slurry which had a flowback pressure of 300 psi. Slurry 2 was a standard cement slurry tested at a higher bottom hole static temperature (BHST), and had a backflow pressure of 600 psi.

In contrast, Slurry 3, a composition according to the present invention, had a backflow pressure of 750 psi, more than twice that of the standard (Slurry 1). Slurry 4, also a composition according to the present invention, was treated with fluid loss additive and had a much higher backflow pressure of 2100 psi. Slurry 5, also a composition according to the present invention, was tested at a higher bottom hole static temperature, and had a backflow pressure of 2250 psi, more than three times that of the applicable standard (Slurry 2). Thus, TABLE 1 shows the increased effectiveness of the sealing compositions of the present invention.

### EXAMPLE 2

Components in the amounts listed in TABLE 2 were added to form two slurries, Slurries 6-7, which contained cross-linkable material gelled in fresh water in a ratio of 5% by weight of the resulting composition.

**TABLE 2**

| Component | Slurry 6 | Slurry 7 |
|---|---|---|
| H₂ZERO cross-linkable material [%bwoc] | 49.42 | - - |
| PERMSEAL cross-linkable material [%bwoc] | - - | 49.63 |
| Fresh water [%bwoc] | - - | - - |
| Dyckerhoff 'G' cement [%bwoc] | 100 | 100 |
| Density [SG] | 1.85 | 1.85 |
| BHST [°F] | 195 | 195 |
| Rheology at mix 300-200-100-6-3 | 300+-220-136-39-35 | 57-48-35-16-15 |
| Rheology @ 195°F 300-200-100-6-3 | 218-173-77-6-3 | ND |
| Squeeze pressure [psi] | 250 | 250 |
| Captured filtrate [cc/min] | 60/5 | 62/0.5 |
| Gelled | Yes | Yes |
| UCA | | |
| 50 psi [hrs:min] | ND | 64:49 |
| 500 psi [hrs:min] | 23:27 | ND |
| Final CS [psi/hrs] | ND | ND |

Table 2 shows that the filtrate of both Slurries 6 and 7 gelled, while providing a curable sealine composition

## Claims

1. A sealing composition for sealing a subterranean zone penetrated by a well bore, which composition comprises cement, cross-linkable material, and water.

2. A composition according to claim 1, wherein the cement is Portland cement, pozzolan cement, gypsum cement, aluminous cement, silica cement or alkaline cement.

3. A composition according to claim 1, wherein the cement is class G cement.

4. A composition according to claim 1, 2 or 3, wherein the cross-linkable material is a 2-hydroxyethyl acrylate monomer, or a copolymer of acrylamide and t-butyl acrylate.

5. A composition according to any of claims 1 to 4, wherein the cross-linkable material is present in an amount of 0.3 mass percent to 10 mass percent.

6. A composition according to any of claims 1 to 5, wherein the water is present in an amount of 25-98 mass percent.

7. A composition according to any of claims 1 to 6, further comprising a latex with a styrene/butadiene weight ratio of substantially 25:75, with the styrene/butadiene copolymer suspended in a substantially 50% by weight aqueous emulsion.

8. A composition according to any of claims 1 to 7, which further comprises a stabilizer.

9. A method of sealing a subterranean zone penetrated by a well bore, which method comprises placing a sealing composition into the subterranean zone; and allowing the sealing composition to set therein, the sealing composition being as claimed in any of claims 1 to 8.
